# EUROPEAN PATENT APPLICATION

(11) **EP 2 100 570 A1**
(43) Date of publication of application: **16.09.2009**
(21) Application number: 09250677.3
(22) Date of filing: 11.03.2009
(51) Int. Cl.: A61C 5/02, A46B 3/04

(54) **Interdental cleaning tool**

(30) Priority: 12.03.2008 US 47015
(71) Applicant: Ranir LLC, Grand Rapids, MI 49512 (US)
(72) Inventor: Crossman, Scott P., Rockford Michigan 49341 (US)
(74) Representative: Terry, Martin Albert Mortimer

(57) **Abstract**

A molded interdental tool includes a plurality of filament strands molded into a portion of the tool. The interdental tool includes a body having a handle portion and a pick portion. The filament strands are molded into the pick portion, with at least a portion of the filament strands protruding or extending from the pick portion. A middle portion of the filament strands may be molded into the pick portion, such that end portions of the filament strands protrude from opposite sides of the pick portion.

## Description

### BACKGROUND OF THE INVENTION

The present invention relates to interdental cleaning tools for insertion between adjacent teeth.

Interdental cleaning tools and brushes are well known and are believed to help remove plaque and prevent gum recession. Interdental tools are typically formed by twisting a U-shaped strand of wire about a plurality of bristles to retain the bristles therein. The ends of the bristles extend through the wire, thus creating an interdental brush.

The process of producing these types of interdental brushes requires achieving the correct positioning of the bristles in the wire and, typically, attaching the wire to a handle. Thus, the process is time consuming and costly. Further, the wire material may be harsh and uncomfortable when rubbed against the user's gums. The wire may also flex or bend during use, which may prevent the brush from entering the desired space between the teeth. Additionally, the twisted wire may not sufficiently retain the bristles, such that the bristles may be pulled out during use or handling of the brush.

### SUMMARY OF THE INVENTION

The embodiments of the present invention provide an interdental tool having filament strands or extensions molded or embedded into the body of the tool.

According to one embodiment, the interdental tool includes a one piece, unitary body having a handle portion and a pick portion. A plurality of filament strands is molded into the pick portion of the tool, with at least a portion of the filament strands protruding or extending from the pick portion.

Optionally, a middle portion of the filament strands is molded into the pick portion, with the end portions of the filament strands protruding or extending from the pick portion from opposite sides of the pick portion.

The pick portion may optionally be tapered in a direction extending away from the handle portion, and may protrude outwardly from the handle portion along a longitudinal axis of the handle portion.

According to another embodiment, a method is provided for producing a series of interdental tools in a mold having at least two product cavities aligned side by side, each of the product cavities defining a handle portion and a pick portion. The method generally includes the steps of (a) placing a plurality of filament strands in the mold and positioning the filament strands across the pick portions of the product cavities; (b) forming at least two tool bodies in the mold; and (c) cutting the filament strands between the pick portions.

Thus, the present invention provides an interdental tool formed from a molded material that is extremely soft and soothing on teeth and gums. The tool is soft and flexible enough to comfortably clean the vulnerable space between the teeth and gums, yet strong enough to avoid breaking and the loss of bristles or filament strands during use. The interdental tool may be produced in an efficient and cost effective manner, especially as compared with conventional interdental brushes, for instance, by simultaneously molding a plurality of the tools with the filament strands in the mold. Further, the tool may be manufactured and subsequently purchased by consumers in a series or group of tools connected at the handle, such that a user may detach or break off a tool as needed, while the unused tools remain conveniently attached to one another.

These and other objects, advantages, and features of the invention will be readily understood and appreciated by reference to the detailed description of the current embodiment and the drawings.

### BRIEF DESCRIPTION OF THE DRAWINGS

Fig. 1 is a perspective view of an interdental tool in accordance with the present invention.
Fig. 2 is a front elevational view of the interdental tool.
Fig. 3 is a side elevational view of the interdental tool.
Fig. 4 is a top view of the interdental tool.
Fig. 5 is a bottom view of the interdental tool.
Fig. 6 is a front elevational view of a series of interdental tools.
Fig. 7 is a perspective view of a portion of a mold used to form a series of interdental tools.
Fig. 8 is a top view of the mold portion.

### DESCRIPTION OF THE CURRENT EMBODIMENT

### I. OVERVIEW

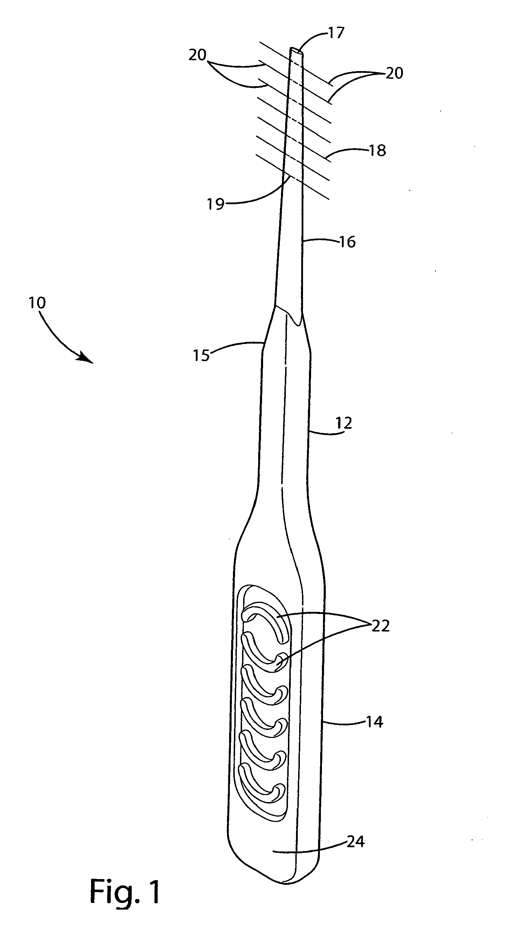

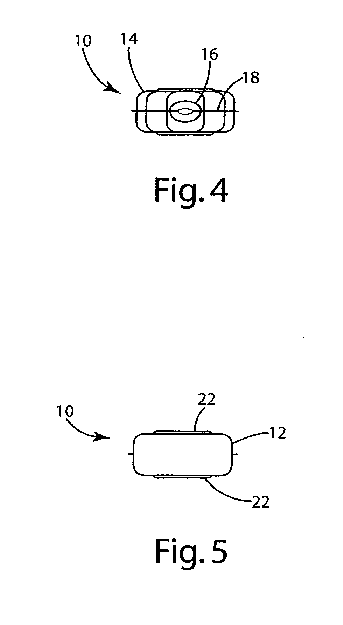

As shown in Figs. 1-5, the present invention is directed to an interdental tool that is generally designated 10. In one embodiment, interdental tool 10 includes an elongated body 12 having a handle portion 14 at one end and a pick portion 16 at the other end. A plurality of filament strands 18 is molded directly into pick portion 16.

### II. STRUCTURE

In the illustrated embodiment, body 12 is formed in a mold. For example, body 12 may be injection molded using a conventional injection molding apparatus having a cavity that is configured to provide a tool body having a handle portion and a pick portion. Body 12 may be formed from any moldable material, such as plastic, which may be injected into the mold to form body 12.

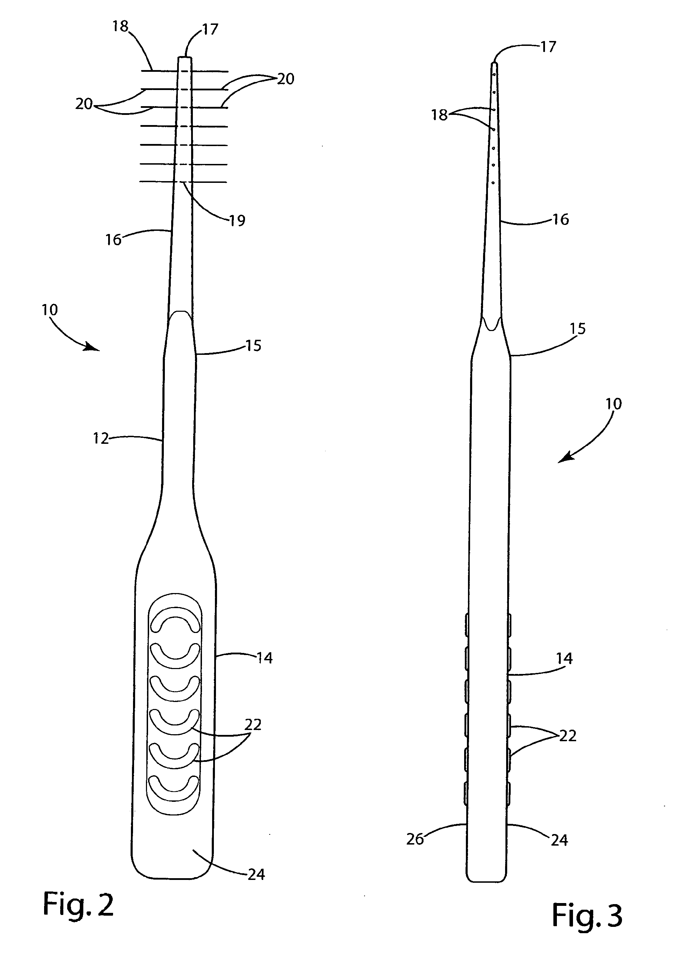

The handle portion 14 of body 12 may be formed in any configuration adapted to be grasped by a user for manipulating tool 10. In the illustrated embodiment, handle 14 is elongated and generally flattened, which provides top and bottom surfaces 24, 26 adapted to be gripped between a user's thumb and forefinger. Optionally, and as shown in Figs. 1 and 2, handle portion 14 includes a plurality of grips 22. In the illustrated embodiment, the grips 22 are molded integrally with the body 12. Alternatively, they may be formed from rubber or any other material that provides an anti-slip gripping surface. Thus, grips 22 may provide a user additional control over the tool 10. In the illustrated embodiment, the top and bottom surfaces 24, 26 of handle portion 14 are recessed to accommodate grips 22. In an alternative embodiment, a pair of arms may extend from a portion of the handle to support a strand of dental floss in tension, to form a combination dental floss device and interdental tool.

Optionally, body 12 may include a neck portion 15 between handle portion 14 and pick portion 16. In the illustrated embodiment, neck portion 15 is narrower than the flattened handle portion 14, yet wider than the tapered pick portion 16. Thus, neck portion 15 provides a transition from the handle portion to the pick portion. Neck portion 15 may provide additional support to tool 10 and may prevent breakage of pick portion 16.

In one embodiment, pick portion 16 is formed as a narrow extension or appendage from handle portion 14. In the illustrated embodiment, pick portion 16 extends outwardly from an end of neck portion 15, along a longitudinal axis of handle portion 14. As shown in Figs. 1-3, pick portion 16 is generally oval-shaped in cross-section and tapers in a manner to progressively decrease in diameter as it extends outwardly from handle portion 14. Pick portion 16 tapers to an end 17, which is adapted to guide tool 10 into the desired position between two adjacent teeth.

Filament strands 18 are formed as slender, flexible appendages that are retained in tool 10 by being molded or otherwise embedded into the pick portion. For example, filament strands may be placed directly into the mold that forms tool 10. In an embodiment in which tool 10 is formed by injection molding, filament strands 18 may be placed in the mold before the desired material is injected into the mold. After the material is injected, and as the material solidifies to form tool 10, the material solidifies around or about filament strands 18. Thus, filament strands 18 are securely retained in pick portion 16, and will not likely fall out during use or handling of the tool.

At least a portion of the filament strands 18 extend or protrude from pick portion 16 to form a brush or bristle adapted to contact and clean and/or massage the interdental area. To achieve the desired placement of the bristles, filament strands 18 may be selectively positioned in pick portion 16. For example, in the illustrated embodiment, a middle portion 19 of the filament strands 18 is molded into pick portion 16, with the two end portions 20 of filament strands 18 extending through and beyond opposite sides of the pick portion (see Figs. 1 and 2). In such a configuration, when pick portion 16 is inserted between two adjacent teeth, the the filament strands contact the adjacent teeth simultaneously. In the illustrated embodiment, filament strands 18 are arranged generally perpendicular to the pick portion 16, in a common plane through pick portion 16, such that end portions 20 form generally straight lines of bristles along opposite sides of pick portion 16 (see Figs. 1, 2 and 4). Alternatively, or additionally, the filament strands 18 may be arranged diagonally across pick portion 16, such that end portions 20 extend at an angle from pick portion 16. In the illustrated embodiment, one of the filament strands 18 is positioned near the end of pick portion 16 opposite handle portion 14 to contact the teeth and gums as soon as pick portion 16 is inserted between the teeth. Optionally, the filament strands may also be arranged to extend from the top or end of the pick portion.

As shown in Fig. 2, the filament strands 18 of the illustrated embodiment are generally equal in length and are cut along a line parallel to the longitudinal axis of tool 10. Alternatively, the filament strands may be cut at an angle to follow the contour of tapered pick portion 16, such that the length of all of the end portions 20 extending from pick portion 16 is generally equal, or they may be cut to have other varying lengths. In the illustrated embodiment, the tool 10 includes seven filament strands 18 that are approximately evenly spaced apart along the longitudial length of the pick portion 16. In other embodiments, the spacing between strands 18 may vary.

Filament strands 18 may be formed from any suitable material adapted to gently clean the interdental area and/or massage and stimulate gums to promote blood circulation and healthy gum tissue. For example, in the illustrated embodiment, the filament strands 18 are formed from a soft multifilament yarn, such as multifilament polyethylene yarn, having a plurality of soft filament fibers twisted together. The multifilament yarn creates the generally circular cross sections of filament strands 18 shown in Fig. 3. Alternatively, filament strands 18 may be formed as monofilament polyethylene tape, which may create elongated or generally rectangular filament strand cross sections. Other suitable materials for filament strands 18 include materials typically used for dental floss, such as nylon, ultra high molecular weight polyethylene (UHMWPE) and polytetrafluoroethylene (PTFE). In an embodiment in which filament strands 18 are formed from polyethylene, the filament strands may have a denure of approximately 800. To ensure the softness of the filament strands, the filament strands may be formed from a material having a denure in the range of approximately 200-1350.

### III. METHOD

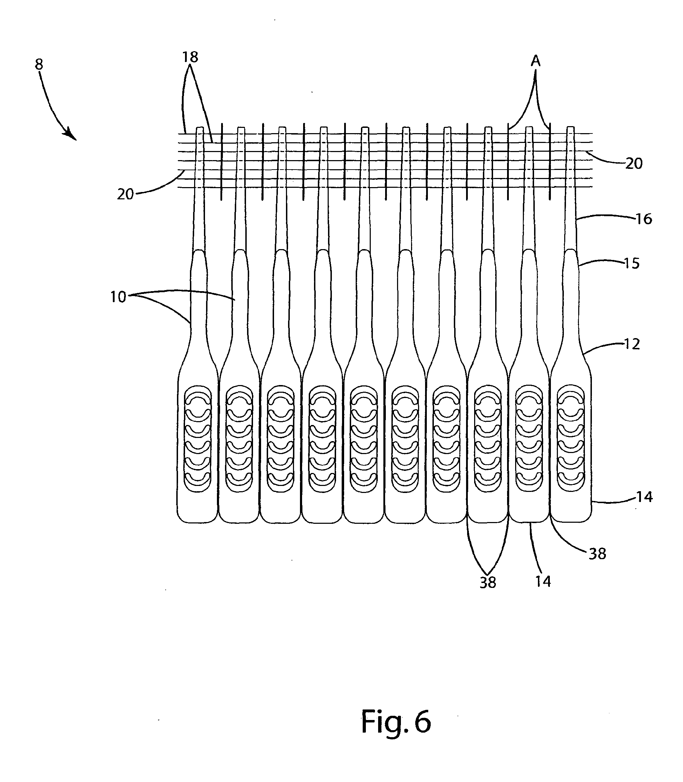

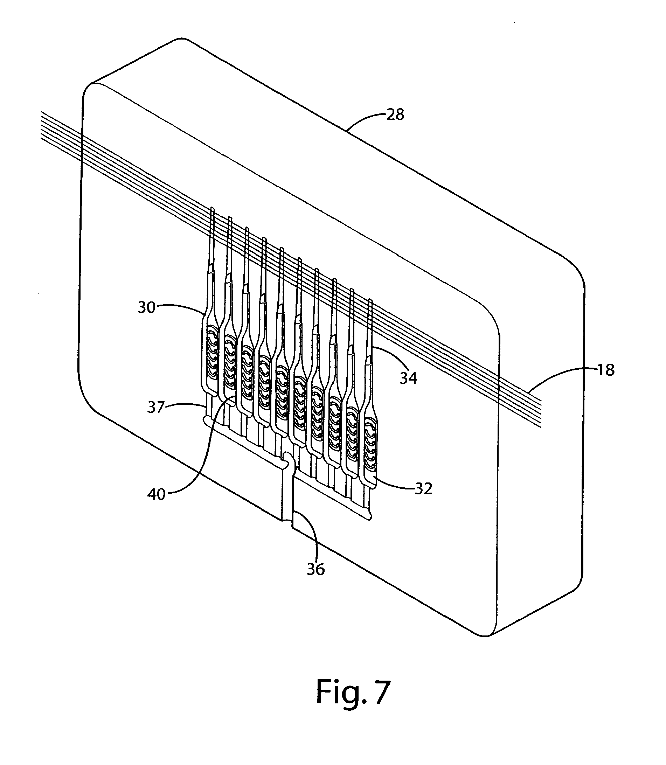

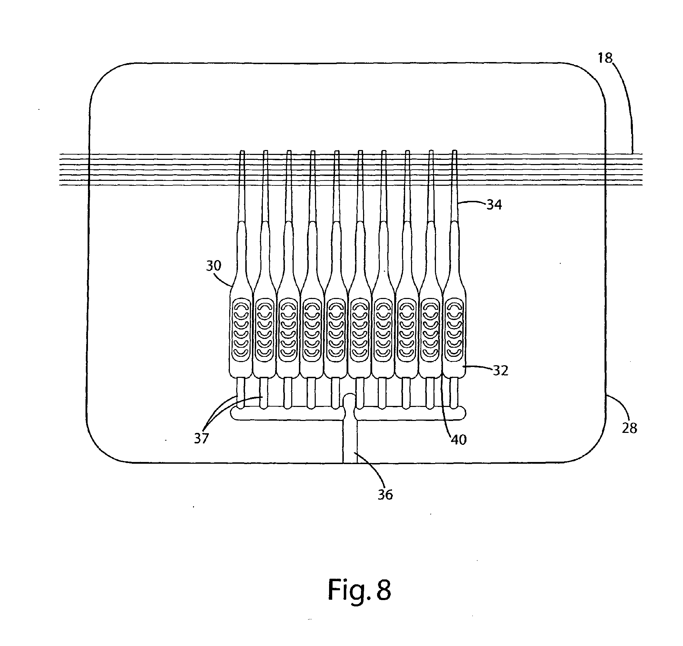

According to another aspect, a method is provided for producing a series of interdental tools, such as series 8 of interdental tools 10 (see Fig. 6). As shown in Figs. 7 and 8, in one embodiment, the interdental tools 10 are produced in a mold having at least two product cavities 30 adapted to receive material to form the bodies of the tools. In the illustrated embodiment, the mold is formed from two mold halves, with one mold half 28 shown in Figs. 7 and 8 and a corresponding mold half (not shown) formed as a mirror image thereof. Each of the product cavities 30 defines a handle portion 32 and a pick portion 34, which may correspond to handle portion 14 and pick portion 16 of interdental tool 10 described above. The product cavities 30 are aligned side by side, such that the respective pick portions 34 and handle portions 32 of the product cavities 30 are adjacent to one another.

The method may include placing a plurality of elongated filament strands 18 in the mold, across the pick portions 34 of the product cavities 30. In the illustrated embodiment, the filament strands 18 are placed on mold half 28, such that the filament strands are positioned between the mold halves when the mold is closed. As shown in Figs. 7 and 8, each of the filament strands is of a sufficient length to reach across the pick portions 34 of the entire series of product cavities 30; however, multiple precut pieces of the filament strands may otherwise be used. The filament strands 18 may be retained in the desired position across pick portions 34 in any conventional manner during the introduction of material into the mold. For example, the filament strands 18 may be retained between the inner surfaces of the mold halves when the mold is closed.

Tool bodies are then formed in product cavities of the mold, for example, by conventional injection molding techniques. A desired material, such as polypropylene or any other plastic suitable for injection molding, is typically injected at high pressure into the mold. In the illustrated embodiment, the material is injected into the mold through a gate 36 and then directed into individual product cavities 30 through a plurality of cavity gates 37. The material then solidifies or hardens in the product cavities to form the tool bodies. The material in the pick portions 34 of product cavities 30 solidifies about the filament strands 18, such that the filament strands are securely retained or embedded in the pick portions of each of the tool bodies. In the illustrated embodiment, each of the tool bodies 10 is molded integrally as a single, unitary piece.

Before or after the tool bodies are removed from the mold, the filament strands are cut between the pick portions, such that the tools may be separated from one another. In the embodiment illustrated in Fig. 6, the filament strands 18 have been cut along lines A, which are generally equidistant from each of the adjacent pick portions 16. However, the filament strands may alternatively be cut at an angle to taper the filament strands about the pick portions of the tools.

Optionally, at least one connector may be formed between the tool bodies in the mold. For example, as shown in Figs. 6-8, a connector 38 is included between each of the handle portions 14 to retain the series 8 of tool bodies 10. In the illustrated embodiment, to form connector 38, the mold includes a channel 40 between the handle portions 32 of each of the product cavities 30. Alternatively, other types of connectors may be used, or the cavities may be completely separate such that a series of unconnected, individual interdetal tools 10 are formed.

As shown in Fig. 6, the series 8 of tools 10 has been removed from the mold with connectors 38 intact. Connectors 38 are adapted to be strong enough to retain the handle portions 14 together through the packaging process and through handling by a consumer, yet weak enough that one of the tools 10 may be easily detached from the remaining tools by breaking or snapping connector 38. Once one of the tools 10 is detached from the series 8, the unused tools remain conveniently connected together.

The above description is that of the current embodiment of the invention. Various alterations and changes can be made without departing from the spirit and broader aspects of the invention as defined in the appended claims, which are to be interpreted in accordance with the principles of patent law including the doctrine of equivalents.

The embodiments of the invention in which an exclusive property or privilege is claimed are defined as follows:

## Claims

1. An interdental tool formed from a mold, said interdental tool comprising:
a body having a handle portion and a pick portion; and
a plurality of filament strands molded into said pick portion, wherein at least a portion of said filament strands protrudes from said pick portion.

2. The interdental tool of claim 1, wherein said filament strands have a middle portion and two end portions, wherein said middle portion is molded into said pick portion and said end portions protrude from said pick portion.

3. The interdental tool of claim 2, wherein said end portions of each of said filament strands protrude from said pick portion at opposite sides of said pick portion.

4. The interdental tool of claim 3, wherein each of said filament strands is generally equal in length.

5. The interdental tool of claim 2, wherein said pick portion is tapered in a direction extending away from said handle portion.

6. The interdental tool of claim 5, wherein said pick portion protrudes outwardly from said handle portion along a longitudinal axis of said handle portion.

7. The interdental tool of claim 6, wherein said body includes a neck portion between said handle portion and said pick portion.

8. The interdental tool of claim 2, wherein said filament strands are:
one of a multifilament yarn and a monofilament tape; or
formed from polyethylene and have a denure of approximately 800; or
formed from nylon.

9. The interdental tool of claim 2, wherein said handle portion and said pick portion are formed from molded plastic as a single, unitary piece.

10. An interdental tool comprising:
a plastic body having a handle portion and a pick portion; and
a plurality of filament strands embedded into said pick portion, wherein at least a portion of each of said filament strands extends from said pick portion.

11. The interdental tool of claim 10, wherein said filament strands have a middle portion and two end portions, wherein said middle portion is embedded into said pick portion and said end portions protrude from said pick portion on opposite sides of said pick portion.

12. The interdental tool of claim 11, wherein said pick portion is tapered in a direction extending away from said handle portion, and preferably wherein said pick portion protrudes outwardly from said handle portion along a longitudinal axis of said handle portion.

13. A method of producing a series of interdental tools in a mold, the method comprising:
placing a plurality of filament strands in the mold;
molding at least two interdental tool bodies in the mold, the mold bodies each including a handle portion and a pick portion, the filament strands being embedded into the pick portion; and
cutting the filament strands between the pick portions.

14. The method of claim 13, further comprising forming at least one connector between the handle portions of the at least two interdental tool bodies.

15. The method of claim 14, further comprising removing the interdental tool bodies from the mold and detaching at least one of the handle portions at the at least one connector.
